# EUROPEAN PATENT SPECIFICATION

(11) **EP 1 471 802 B1**
(45) Date of publication and mention of the grant of the patent: **08.10.2008**
(21) Application number: 03705493.9
(22) Date of filing: 07.02.2003
(51) Int. Cl.: A23L 1/305, A23J 3/06, A23J 3/10, A23J 3/16, A23J 3/34

(54) **SATIETY-INDUCING FOOD**
SÄTTIGUNG INDUZIERENDE LEBENSMITTEL
ALIMENT INDUISANT LA SATIETE

(30) Priority: 08.02.2002 NL 1019931
(43) Date of publication of application: 03.11.2004
(73) Proprietor: Nederlandse Organisatie voor Toegepast-Natuurwetenschappelijk Onderzoek TNO, 2628 VK Delft (NL)
(72) Inventor: DE JONG, Govardus, Adrianus, Hubertus, NL-3828 EZ Hoogland (NL)
(74) Representative: Winckels, Johannes Hubertus F.
(86) International application number: PCT/NL2003/000088
(87) International publication number: WO 2003/065825

(56) References cited:
- EP-A- 0 982 038
- EP-A- 1 085 023
- WO-A-00/22937
- WO-A-01/10232
- WO-A-01/17377
- US-A- 5 246 723
- US-A- 5 834 232
- US-B1- 6 190 724
- MOTOKI M ET AL: "RECENT RESEARCH TRENDS IN TRANSGLUTAMINASE TECHNOLOGY FOR FOOD PROCESSING" FOOD SCIENCE AND TECHNOLOGY RESEARCH, XX, XX, vol. 3, no. 6, 2000, pages 151-160, XP001070086

## Description

The invention relates to a food that induces satiety. The present invention particularly relates to a food or food additive that is subject to a reduced digestion speed in the stomach. A food item or food additive according to the invention can be processed in human food and can maintain a long-lasting feeling of satiety in the consumer after consumption.

To limit or reduce overweight of the human body, an multiplicity of strategies can be used. In general, strategies to reduce overweight are aimed at-intensifying metabolism and/or reducing calorie intake. Metabolism can be intensified by practice of sports, for example. In this way, more calories are combusted.

Reduction of calorie intake by individuals is an aspect to which food manufacturers can make a specific contribution. Thus a wide range of low-fat or non-fat foods have already been developed that reduce calorie-intake while food quantity remains equal. However, many flavorings can be found in fat fractions of food products and thus a disadvantage of such food products is that they exhibit great loss in taste.

Another category of food products that can play a role in limiting calorie intake are food ingredients that can be added to the diet and are specifically aimed at accelerating intestinal transit. This reduces the possibility of calorie absorption from the food. Examples are laxatives. However, the use of laxatives is generally experienced as being relatively unpleasant.

Other foods that can play a role in limiting calorie intake are products that give a sense of satiety more quickly and reduce the appetite. A feeling of satiety arises when the stomach contents increase due to food intake. The duration of the feeling of satiety persists until the stomach empties itself. Because of this so-called "full" feeling, the individual no longer has any appetite and will be less inclined to take in more calories.

To date, products that effect a feeling of satiety are mainly based on fibers. US 5,104,676 and US 6,207,638 describe a product for weight control by inducing satiety based on a combination of soluble and insoluble fibers, protein and fat. US 5,688,547 describes a liquid meal replacement that induces a feeling of satiety and is based on a combination of cellulose, protein and sweetener. WO 01/17377 describes an agent for inducing satiety that is based on stable uronic acid-containing polysaccharides.

Fibers are known to produce a less pleasant mouthfeel. In addition, it is known that fibers can make an important contribution to the mass of the intestinal contents. In this way, indigestible fibers provide mass but no calories. However, the moment of gastric emptying, whereby the stomach contents are removed to the small intestine, is hardly delayed by fibers. For this reason, when using fibers, the feeling of satiety will decrease relatively fast after which the appetite can return.

From US 6,190,724 an infant formula is known which contains modified proteins whose rate of digestion is slowed compared to unmodified, normal proteins. The modified proteins are obtained from starting proteins, whereby the modified proteins are modified by polymerization of the starting proteins, by cross-linking the starting materials or by attachment of sugar chains to the protein chain of the starting proteins.

In WO 00/22937, a protein material has been described for slow digestion. The protein material is treated to convert fast-digesting proteins into slow-digesting proteins. In order to establish this, fast-digesting proteins need to be mixed with polysaccharides to form microscopic droplets from which microparticles are formed that are gelled by means of a heat treatment.

In US 5,834,232, cross-linked gelatin gels are described for use within a variety of medical and industrial applications. The cross-linked gel is prepared by adding a transglutaminase to a composition of a temperature-sensitive gel-forming protein such as gelatin or collagen. The cross-linked gels can also be used in food products that are rich in gelatin or collagen, such as gelatin desserts and collagen sausage casings.

One object of the present invention is to provide a food or food additive that causes a longer-lasting feeling of satiety. Another object of the invention is to provide a food or food additive that is subject to a prolonged residence in the stomach and has a delaying effect on gastric emptying.

Surprisingly, it has been found that a food that contains cross-linked proteins can serve the purpose described above. According to the present invention, cross-linked proteins are subject to a prolonged residence in the stomach when they are present there in the form of a gel.

The present invention relates to a food or food additive as defined in claim 1. Such a food or food additive is subject to a reduced digestion speed in the stomach. In a preferred embodiment according to the invention, the cross-linked protein is present in the food in the form of a gel. Of course, such a gel itself can also serve as a food according to the present invention. Another highly suitable embodiment according to the invention concerns a cross-linked protein that is present in a food in dried form.

In principle, any protein that can be processed in food products is eligible for use in connection with the present invention. The origin of the protein or the properties of the protein are not limitative of the choice of protein. However, it should possible for proteins that can be used in an aspect of the invention to be cross-linked.

Suitable proteins are *inter alia,* but not exclusively, vegetable proteins obtained from beans or cereals and animal proteins, including milk proteins such as casein, egg proteins such as ovalbumin, meat proteins such as myosin and actin, blood proteins such as serum albumin and tendon proteins such as gelatin and collagen. Preferably, gelatin, casein and soy protein are used in case of an enzymatic cross-linking reaction. More preferably, gelatin is used in the case of an enzymatic cross-linking reaction.

In case of physical cross-linking, for example through heat, serum albumin and whey proteins are very suitable. The proteins can be used separately as well as combined in a food or food additive according to the present invention.

The proteins can be partly hydrolyzed, through chemical or enzymatic action, and be partly or wholly modified. In the food according to the invention various proteins can also be combined.

A very suitable method to obtain protein that can be used in the present invention utilizes an enzymatic cross-linking reaction, but other, both physical and chemical, cross-linking methods are possible as well. For example, it is possible to cross-link the proteins through a heat treatment. In this case, a so-called heat gelling will be involved. Although in general this is understood to be a reversible binding whereby disulfide bridges are formed, which can be broken again by means of heat or a reducing agent, this manner of cross-linking finds suitable application in an embodiment of the present invention. Chemical manners of cross-linking are *inter alia* cross-linking by means of glutaraldehyde and, for example, "liquid smoke".

Cross-linking enzymes that can be used in the present invention are *inter alia,* but not exclusively, transglutaminase, lysyloxidase, protein disulfide isomerase, protein disulfide reductase, sulfhydryl oxidase, polyphenol oxidase, bilirubin oxidase, laccase and peroxidase enzymes. Preferably, the enzyme transglutaminase is used for the cross-linking reaction. The origin of the enzyme that is used in the cross-linking reaction of the protein is not limiting. Enzymes can be of microbial origin, coming from a bacterium, a yeast or a fungus, but also of vegetable or animal origin. With great preference, transglutaminase (EC 2.3.2.13) of microbial origin is used. Transglutaminase obtained from *Streptoverticillium mobaraense* is very suitable. It is also possible to use an enzyme of genetically modified origin for cross-linking. Combinations of different enzymes can also be used.

Prior to the cross-linking reaction, the protein that is used in the present invention can be treated with a digestive enzyme, or predigested, in order to prepare a protein gel that can stay even longer in the stomach without being digested. Digestive enzymes that can be used in this connection are *inter alia* pepsin, trypsin and chymotrypsin. The degree to which the protein is decomposed by the digestive enzyme determines the eventual stability to decomposition by digestive enzymes and thus the degree to which the decomposition speed of the gel in the stomach is reduced. Also, other enzymes, such as elastases or carboxypeptidases, can be used to further increase the digestive decomposition stability of the cross-linked protein gel. In general, proteases are suitable enzymes to predigest the protein.

In order to predigest a protein by means of a protease, the protein can be dissolved or dispersed in an aqueous solution. Depending on the protease used for this treatment and the protein used, a skilled person can adjust and optimize the reaction conditions, if desired. For example, when pepsin is used for the reaction mixture, a lower pH will be chosen than when chymotrypsin is used.

The degree to which the non-cross-linked protein is decomposed by proteases can be regulated by varying the reaction time, temperature and pH of the reaction mixture. Adjustments in the concentration of the protein to be hydrolyzed, the concentration of the protease, and the ratio between protein and protease can also be varied to obtain the desired degree of decomposition or hydrolysis of the protein.

The ease with which a protein can be hydrolyzed differs from protein to protein. Thus, a relatively flexible protein with a relatively open structure will be decomposed more easily than a protein with a solid or rigid structure. In view of this, it is important that the hydrolysis is performed carefully, adjusting the dosage to the type of protein to be hydrolyzed. A fully decomposed protein contains many fragments that are difficult to cross-link mutually. This difficulty is caused by the absence in the fragments of certain cross-linkable specific amino acids. This means that an optimum and preferred hydrolysis does decompose the protein, but does not take away the possibility to cross-link and gel the protein. This requires a relatively mild hydrolysis. Upon an incomplete or mild decomposition mainly long peptides will be left, which can then be used in an embodiment of the invention.

As said before, the degree to which the non-cross-linked protein can be predigested can be regulated by adjusting the concentration of protease. A quantity of 1 mg per gram of non-cross-linked protein to be treated is very usable. Preferably, a quantity of 0.1 mg of protease per gram of the non-cross-linked protein to be treated is used. The quantity to be used depends on the purity of the protease used. Many commercially available proteases are not pure at all and in many cases it is necessary to adjust the above quantities. The origin of the protease is not essential in this treatment. Pepsin (EC 3.4.23.1) derived from pig stomach lining, for example, is well usable.

A protease treatment of a protein according to the present invention preferably results in a partial hydrolysis of the protein treated. A degree of hydrolysis (DH) that is very usable in the present invention can vary between 0.01-50%, preferably between 0.1-20%, more preferably between 1-10%.

The protein treated with protease can then be cross-linked. The enzymatic cross-linking reaction can be performed in a paste, a slurry, a dispersion or in a solution of the protein. Depending on the enzyme that is used for cross-linking, the protein used and the desired degree of cross-linking, a skilled person can adjust and optimize the reaction conditions and deploy certain auxiliary substances to achieve this. For example, the reaction time can be extended with a view to increasing the degree of cross-linking. The reaction conditions of protein cross-linkings vary from enzyme to enzyme. For example, for a cross-linking reaction with laccase, the presence of oxygen is required, and for the use of peroxidase hydrogen peroxide will have to be added to the reaction mixture.

As different cross-linking enzymes cross-link different amino acids, this can also be a reason to adjust the reaction conditions. The principle applies that the protein in the stomach will be more stable at a higher degree of cross-linking. The reaction conditions during the cross-linking reaction are preferably chosen so as to make optimal cross-linking possible. These reaction conditions comprise conditions such as temperature, reaction time, pH, salt concentration, protein concentration and the presence of any auxiliary substances.

The presence of salts such as calcium in the reaction mixture can increase the activity of certain cross-linking enzymes. The presence of a buffer is desirable to adjust the acid content to a desired value and to keep it stable. The presence of emulsifiers and surface active agents such as stabilizers can promote the cross-linking reaction by keeping the enzymes in an active form and is part of the present invention.

A method for performing a cross-linking reaction according to the present invention comprises the preparation of the reaction mixture by dissolving or suspending optionally predigested protein in a solvent, preferably an edible solvent, more preferably water, in a quantity of approximately 1 to approximately 40 wt%, preferably approximately 5 to 20 wt%, based on the weight of the solution. In case a cross-linking enzyme is used, the aqueous solution is preferably buffered, with the pH being set at a value between approximately 4 and approximately 9, preferably between 6 and 7.

In⁻addition, the method comprises the addition of the cross-linking enzyme to the reaction mixture in a quantity depending on *inter alia* the cross-linking enzyme to be used. In the case of transglutaminase a quantity of approximately 1 mg to approximately 1000 mg per liter, preferably between 10 and 100 mg per liter of reaction mixture, is added to the reaction mixture. Depending on the purity of the enzyme preparation this equals a quantity of enzyme of about 0.025 to 25 units per ml of reaction mixture, preferably 0.25 to 2.5 units per ml of reaction mixture, using as a definition that: 1 U of enzyme at an optimum degree of acidity and temperature catalyzes the formation of 1.0 µmol of product per minute. In the case of transglutaminase this can be determined by following the formation of hydroxamate from N-alpha-CBZ-Gln-Gly and hydroxylamine at a pH of 6.0 and a temperature of 37°C. On the basis of the above a skilled person will be able to determine what quantities are suitable when other cross-linking enzymes are used.

Then the cross-linking reaction is performed at a temperature that depends on the cross-linking enzyme to be used. The cross-linking reaction can be performed at a temperature of between 4°C and 80°C, preferably between 4°C and 65°C, more preferably between 40°C and 50°C. In the case of transglutaminase, a temperature of between 4°C and 65°C is suitable, preferably the reaction with transglutaminase is performed at a temperature between approximately 40 and approximately 50°C.

The cross-linking of a protein as described above will cause the protein in the solution or suspension to gel, forming a gel that, if processed into or in a food, imparts this food a prolonged residence in the stomach.

As said, the optimum reaction conditions during cross-linking reactions of proteins by different cross-linking enzymes may vary. The quantity of enzyme needed to cross-link a quantity of 1 gram of protein usually amounts to a few milligrams, but can be much lower for certain enzymes. A cross-linked protein may further be obtained by performing the enzymatic cross-linking reaction for a period of between 10 minutes and 100 hours, preferably between 1 and 24 hours.

Depending on the desired end result, for example the degree of cross-linking or the time in which this cross-linking should be achieved, the cross-linking time or the temperature of the reaction mixture can be adjusted. The temperature optimum and the temperature stability of the enzyme to be used can be taken into account here. To achieve a high degree of cross-linking, a temperature that is relatively far below the temperature optimum of an enzyme can be chosen. This can have the advantage that, for example, the enzyme is not inactivated quickly, allowing the reaction to proceed for a long time.

Depending on the conditions used during a cross-linking reaction of a protein according to the present invention, the degree of cross-linking of the cross-linked protein can vary. It is not possible to indicate an unequivocal value for the degree of cross-linking of the protein such as it can be processed in the various embodiments according to the present invention. Therefore the term cross-linking according to the present invention should be understood to comprise the formation of cross-links between the various protein molecules that were not present in the original (natural) preparation. The degree of cross-linking can be established *inter alia* by determining the molecular weight. When the molecular weight is increased in relation to the basic material, cross-linking is involved. Suitable manners of determining the molecular weight are *inter alia* gel filtration or SDS-PAGE. These methods of determination are known to a skilled person.

After consumption of the food or food additive that comprises a cross-linked protein according to the invention, at least part of the cross-linked protein component of the food or food additive is preferably present in the stomach in the form of a gel. In this way, the decomposition process in the stomach is decelerated the most effectively.

Cross-linked protein is used in a dried form. In such an embodiment it is important that the protein, after consumption of the food in which it is processed, gels in the mouth, the esophagus or the stomach. The dried form will usually involve a food additive that is added to the food as a powder in a quantity that can effectively delay the digestive process in the stomach.

In this connection, a very suitable food is, for example, a liquid food to which the cross-linked protein is added as dried powder. The size of the particles of such a powder is preferably 100-500 µm.

Preferably, a powder of a cross-linked protein is used that gels at an acid pH. Preferably, such a powder gels in the stomach after intake. A suitable pH for the powder to gel is a pH between 1 and 4, preferably between 1 and 3, and more preferably a pH of approximately 2. Thus, the gelling is preferably pH-dependent.

The cross-linked protein can be used in a food or food additive according to the invention in a quantity of between 1 wt% and 100 wt% based on the weight of the food. Preferably a cross-linked protein is used in a food in a quantity of between 5 wt% and 20 wt%.

The application of the food or food additive according to the invention preferably resides in its action of appetite depressant, by prolonging the stay of a food in the stomach. It is possible but not imperative that a food or food additive according to the invention has a substantial nutritional value or energy content. A food or food additive according to the invention can comprise a nutritional value of approximately 50 to 5000 kcal per portion to be consumed. Usually a portion to be consumed will be 50 to 5000 grams.

A suitable method of preparation for a food according to the invention comprises a method in which a Cross-linked protein is gelled beforehand and in which this gel, if desired after division in smaller fragments and, optionally after division in smaller fragments and after drying, is mixed with another food component or food. Examples of such foods are desserts (for example yogurt), dairy drinks or soft drinks, and soups, both instant soups and ready-to-eat soups, and for example meat products or salads.

An edible liquid that is used for the preparation of a gel according to the invention should be understood in relation to the present invention to comprise any edible liquid, i.e. any liquid suitable for consumption, both as solution, dispersion and as emulsion. The liquid that can be used to produce the gel according to the invention is, for example, water, but other liquids can also be used with particular advantage in a gel according to an embodiment of the invention, such as milk or milk products, (soft) drinks or (instant) soups.

The gel obtained is dried. The drying can be performed in an oven or by air-drying. The manner in which the gel is dried is not important. After drying a complete or partial gel form may remain.

Before or after drying, the gel obtained can be optionally reduced to smaller gel fragments by cutting, breaking, grinding or chopping. Then the dried gel powder can be mixed with other food ingredients or foods. If desired, the dried gel powder can absorb moisture again after mixture with a moisture-containing food, increasing the volume of the gel powder. From the dried gel a powder with a preferred particle size of 100-500 µm can be composed. A gel according to the present invention has a surprisingly neutral flavor and can easily be flavored by introducing aromatic substances and flavorings in the liquid phase beforehand.

During the preparation of the gel, solid and liquid, soluble and insoluble food ingredients can also be added to the liquid mass of non-cross-linked protein, so that these are incorporated in the gel after cross-linking. Such food ingredients can comprise components such as cut, but otherwise unprepared vegetable, fruit or meat or milk products, but also already prepared components such as fried, cooked or fermented products. Aromatic substances, colorings and flavorings and, if desired, oils or fats, saccharides and carbohydrates can also be added to the gel to improve its flavor or texture. The order in which the various components of a food according to the invention are combined is not essential.

The dry cross-linked protein powder can be mixed with an edible liquid and then be consumed to produce a long-lasting feeling of satiety in the consumer. This dry cross-linked protein powder can also be added to muesli and other breakfast products, to muesli bars and baked products (e.g. cookies), to desserts (e.g. yogurt or pudding), dairy drinks or soft drinks, and soups, both instant soups and ready-to-eat soups, and to meat products. Preferably, a powder of a cross-linked protein gel is used that forms a gel at an acid pH. Preferably such a powder forms a gel in the stomach upon ingestion. A suitable pH at which the powder forms a gel is a pH between 1 and 4, preferably between 1 and 3 and more preferably a pH of approximately 2. Thus, the formation of the gel is preferably pH-dependent.

It will also be clear to a skilled person that, on the basis of this description, it is possible to concentrate the proteins present in milk to a liquid with a milk protein content that is sufficient to gel by means of an enzymatic cross-linking reaction, and to dry the resultant gel and grind it into a powder. Adding water results in a liquid which in taste can hardly be distinguished from regular milk, but which has excellent satiety-inducing properties.

The invention will presently be elucidated by the following examples. The following examples illustrate the formation of a cross-linked protein gel, from which the cross-linked protein powder in accordance with the present invention can be obtained.

### Example 1

To a 10% gelatin solution of pH 6, 10 µg/ml of microbial transglutaminase (EC 2.3.2.13) from *Streptoverticillium mobaraense* was added. The enzyme preparation used was pure for >95 wt%, based on the total protein content of the preparation. The enzyme was obtained after purification over an anion exchanger, according to methods known to a skilled person, to a specific activity of 23 units per mg of protein, using the definition that 1 unit of enzyme at pH 6.0 and 37°C catalyzes the formation of 1.0 µmol hydroxamate per minute from N-alpha-CBZ-Gln-Gly and hydroxylamine. (L-Glutamine acid gamma monohydroxamate as a standard: Folk, J.E. and Cole, P.W., Biochim. Biophys. Acta, 122, 244 (1966)).

The solution was incubated for 24 hours at 40°C. During this incubation a gel was formed due to advanced cross-linking. Then the gel was cooled down to 4°C. In addition, a non-cross-linked 10 wt% gelatin solution was cooled down to 5°C, also resulting in the formation of a gel. From both gels a piece of exactly 5 ml was cut off. Then this piece of gel was hydrolyzed in a pH stat with 1 mg/ml of pepsin (3000 units/mg) at pH 2. The degree of hydrolysis and the dissolution of the gel were an indication for the stability in the stomach.

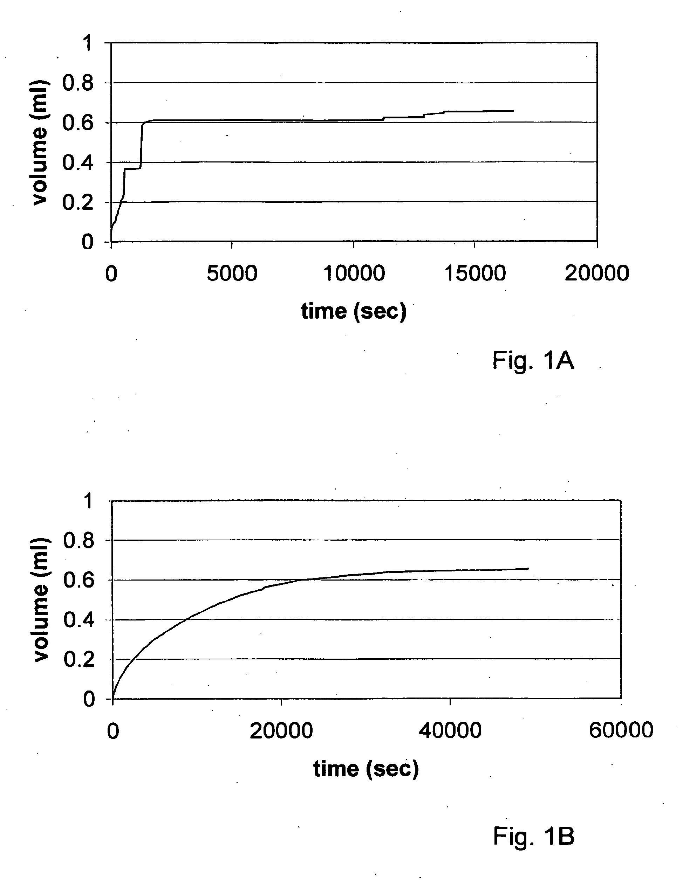

The non-cross-linked gelatin gel disintegrated within 1,000 seconds as a consequence of the combination of dissolution and hydrolysis. The cross-linked gel, by contrast, dissolved more slowly by a factor 20, the gelatin gel being increasingly reduced as a consequence of hydrolysis on the outside. The acid consumption profiles measured during hydrolysis in the pH stat are shown in Figure 1 (A: gelatin gel; B: gelatin gel after cross-linking with transglutaminase).

### Example 2

To a 10% gelatin solution 1 mg/ml (3000 units/mg) pepsin was added. The gelatin was hydrolyzed at pH 2. During the hydrolysis samples were taken at different times, with the pepsin being inactivated by increasing the pH of the samples to 6. Then the various time samples were cross-linked with transglutaminase (10 µg/ml) for 24 hours. After 24 hours of incubation, it was found that, besides the non-hydrolyzed gelatin (0 sample), only the time samples of 15 and 30 minutes were gelled by the influence of transglutaminase. All later time samples could no longer be cross-linked into a gel as a consequence of the hydrolysis having advanced too far. Then the gels were subjected to a hydrolysis in the pH stat with 1 mg/ml of pepsin (3000 units/mg). The combination of hydrolysis and cross-linking was found to be capable of producing a slowly digestible gel.

## Claims

1. A food or food additive that causes a longer-lasting feeling of satiety and that consists of a cross-linked protein powder, which cross-linked protein powder is obtained by cross-linking a protein into a gel, and wherein said gel is dried, optionally ground and processed as a powder.

2. A method for the preparation of a food or a food additive according to claim 1, in which method a protein is cross-linked into a gel, and wherein said gel is dried, optionally ground and processed as a powder which powder is processed in a food or food additive.

3. A method according to claim 2 in which the protein is treated with a protease before cross-linking.

4. A method according to claim 2 or 3, in which the protein is gelatin, casein and/or soy protein.

5. Use of a food or food additive as described in claim 1 for the cosmetic treatment of overweight.

6. Cosmetic Use of a cross-linked protein in a food or food additive as described in claim 1 in order to make the food or food additive after consumption induce a long-lasting feeling of satiety and/or make it depress the appetite.

7. Cosmetic Use of a food or food additive according to claim 1 as an appetite depressant.

## Patentansprüche

1. Lebensmittel oder Lebensmitteladditiv, das ein länger anhaltendes Gefühl von Sattheit erzeugt und das aus einem Pulver von vernetztem Protein zusammengesetzt ist, wobei das Pulver von vernetztem Protein erhalten wird durch Vernetzen von Protein zu einem Gel, und wobei das Gel getrocknet, gegebenenfalls gemahlen und zu Pulver verarbeitet wird.

2. Verfahren zur Herstellung eines Lebensmittels oder eines Lebensmitteladditivs gemäß Anspruch 1, bei dem Protein zu einem Gel vernetzt wird, und das Gel getrocknet, gegebenenfalls gemahlen und zu Pulver verarbeitet wird, wobei das Pulver in ein Lebensmittel oder Lebensmitteladditiv verarbeitet wird.

3. Verfahren nach Anspruch 2, bei dem das Protein vor dem Vernetzen mit Protease behandelt wird.

4. Verfahren nach Anspruch 2 oder 3, bei dem das Protein Gelatine-, Casein- und/oder Sojaprotein ist.

5. Verwendung eines Lebensmittels oder Lebensmitteladditivs gemäß Anspruch 1 zur kosmetischen Behandlung von Übergewicht.

6. Kosmetische Verwendung von vernetztem Protein in einem Lebensmittel oder Lebensmitteladditiv gemäß Anspruch 1, damit das Lebensmittel oder Lebensmitteladditiv nach Verzehr ein länger anhaltendes Gefühl von Sattheit hervorruft und/oder den Appetit unterdrücken lässt.

7. Kosmetische Verwendung eines Lebensmittels oder Lebensmitteladditivs gemäß Anspruch 1 als Appetitzügler.

## Revendications

1. Aliment ou additif alimentaire provoquant une sensation de satiété qui dure plus longtemps et constitué d'une poudre de protéine réticulée, laquelle poudre de protéine réticulée est obtenue en réticulant une protéine afin de former un gel, ledit gel étant séché, le cas échéant broyé et transformé en poudre.

2. Procédé de préparation d'un aliment ou d'un additif alimentaire selon la revendication 1, dans lequel une protéine est réticulée pour former un gel et ledit gel est séché, le cas échéant broyé et transformé en une poudre qui est incorporée dans un aliment ou un additif alimentaire.

3. Procédé selon la revendication 2, dans lequel la protéine est traitée avec une protéase avant la réticulation.

4. Procédé selon la revendication 2 ou la revendication 3, dans lequel la protéine est la gélatine, la caséine et/ou une protéine du soja.

5. Utilisation d'un aliment ou additif alimentaire selon la revendication 1 pour le traitement cosmétique de la surcharge pondérale.

6. Utilisation cosmétique d'une protéine réticulée dans un aliment ou additif alimentaire selon la revendication 1 afin que ledit aliment ou additif alimentaire une fois ingéré induise une sensation de satiété durable et/ou réduise l'appétit.

7. Utilisation cosmétique d'un aliment ou d'un additif alimentaire selon la revendication 1 comme anorexigène.
